# FASCICULE DE BREVET EUROPEEN

(11) **EP 1 846 721 B1**
(45) Date de publication et mention de la délivrance du brevet: **11.05.2011**
(21) Numéro de dépôt: 06709474.8
(22) Date de dépôt: 03.02.2006
(51) Int. Cl.: F28G 1/12, F28F 13/12, F28D 7/16, F28D 17/00, C03B 5/237

(54) **Four pour la fusion de verre**
Glasschmelzofen
Glass furnace

(30) Priorité: 10.02.2005 FR 0550397
(43) Date de publication de la demande: 24.10.2007
(73) Titulaire: Saint-Gobain Technical Fabrics Europe, 73000 Chambéry (FR)
(72) Inventeur: VAN HEES, Christian, NL-4706 Kl Roosendaal (NL)
(74) Mandataire: Colombier, Christian
(86) Numéro de dépôt international: PCT/FR2006/050093
(87) Numéro de publication internationale: WO 2006/085019

(56) Documents cités:
- DE-B- 1 006 106
- FR-A1- 2 790 545
- US-A- 2 721 626
- US-A- 4 366 855
- US-A1- 2003 116 306
- PATENT ABSTRACTS OF JAPAN vol. 007, no. 037 (M-193), 15 février 1983 (1983-02-15) -& JP 57 187596 A (HITACHI SEISAKUSHO KK), 18 novembre 1982 (1982-11-18)

## Description

La présente invention se rapporte à un four pour la fusion de verre ou matière minérale similaire, tel que décrit dans le document FR 2 790 545. Dans un four à verre, la composition de matières vitrifiables est amenée à l'état fondu à une température de l'ordre de 1200 à 1300°C au moyen d'énergie thermique apportée en particulier par des brûleurs à gaz. Les gaz de combustion s'échappent du four à une température de l'ordre de 1000 à 1200°C, en entraînant avec eux une certaine quantité de matières gazeuses provenant de composants volatils de la composition vitrifiable, tels que le bore.

La zone de sortie des gaz du four est généralement équipée d'une tour de refroidissement destinée d'une part à récupérer une partie de la chaleur des gaz de combustion, afin de la réutiliser pour réchauffer l'air primaire de combustion, et d'autre part à condenser les matières volatiles afin de les séparer en vue du rejet du gaz refroidi dans l'atmosphère.

La tour de refroidissement comprend généralement un premier étage où le fluide froid est de l'air atmosphérique, qui quitte l'échangeur à une température de l'ordre de 600°C et peut être recyclé au niveau des brûleurs en tant qu'air de combustion, étage dont les gaz de combustion traités sortent à une température de l'ordre de 700°C, et un deuxième étage où le fluide froid est de l'eau pulvérisée directement dans les gaz de combustion traités entraînant la solidification en poussière des substances condensables. Le mélange de gaz refroidi, de vapeur d'eau et de poussière est ensuite soumis à une séparation par un électrofiltre qui piège les poussières et rejette un gaz à une température d'environ 400°C.

Ce rejet à l'atmosphère représente une perte d'énergie non négligeable qui peut se chiffrer en plusieurs mégawatts.heure de fonctionnement d'une installation industrielle de production de verre.

Cependant, la présence des matières condensables qui représente plusieurs grammes de matière par mètre cube de gaz chaud empêche de traiter ce gaz dans un échangeur de chaleur classique car celui-ci serait bouché très rapidement par les poussières condensées. Il ne serait capable de fonctionner que suivant des cycles brefs entrecoupés de cycles de nettoyage qui posent de réelles difficultés techniques intrinsèques et qui sont en outre susceptibles de perturber la production de verre.

Hors, le rejet à l'atmosphère de matière condensable est en voie d'interdiction par les législations environnementales. Il devient donc nécessaire que les fumées soient dépourvues de matière condensable lors de leur rejet.

Le but de l'invention a été de résoudre ce problème de dépollution des fumées et de fournir un dispositif capable d'extraire la chaleur de ces gaz chauds de façon durable tout au long de la production desdits gaz sans perturber la production.

A cet égard, l'invention a pour objet un four pour la fusion de verre ou matiére minérale similaire, comprenant une zone de sortie de gaz chaud contenant des poussières et/ou des substances condensables et équipé d'une unité de refroidissement dudit gaz, l'unité de refroidissement comprenant au moins un dispositif pour l'extraction de chaleur à partir de gaz, notamment de combustion, contenant des poussières et/ou des substances condensables pour la récupération des condensats, et comprenant au moins un échangeur de chaleur comportant une enceinte ayant une symétrie de révolution entourée d'une enveloppe de refroidissement, le dispositif comportant un orifice permettant le passage d'un mélange optimal de l'agent de traitement de surface de la surface interne de ladite enceinte, ladite enceinte étant pourvue par ailleurs d'au moins une vis à pas hélicoïdal disposée dans un tube de manière coaxiale.

Grâce à cette circulation rotative du courant de gaz, les poussières et/ou substances sont projetées vers les parois froides de l'enceinte de traitement et se condensent sur ces parois froides et elles y adhérent, l'accumulation de solides être détruite suite à l'abrasion consécutive au passage de l'agent de traitement de surface au sein de l'enceinte

Le fluide circulant dans l'enveloppe de refroidissement peut être de tout type couramment employé, notamment huile ou eau.

Suivant d'autres caractéristiques avantageuses le dispositif a une forme sensiblement cylindrique, conique, tronconique ou résultant de l'association d'au moins un cylindre et d'au moins un cône ou tronc de cône.

De préférence, le dispositif est disposé horizontalement.

Les dimensions du dispositif et le nombre d'enceintes qui est incorporé au sein du dispositif sont adaptés au volume de gaz à traiter en fonction de l'installation qui produit les gaz.

La partie dans laquelle règne le courant de gaz rotatif sensiblement hélicoïdal est de préférence suffisamment longue pour que le courant suive au moins deux tours d'hélice, au moins 4, notamment au moins 5.

Les moyens pour créer un courant de gaz rotatif comprennent au moins une vis à pas hélicoïdal disposée dans un tube de manière coaxiale.

Dans un mode de réalisation avantageux, les moyens pour créer un courant de gaz rotatif comprennent d'une part, des moyens d'amenée du gaz chaud tangentiellement au dispositif de traitement, et d'autre part, des vis à pas hélicoïdal. Le mouvement rotatif hélicoïdal s'obtient aisément sur la longueur désirée en sélectionnant la vitesse d'entrée des gaz et le pas de l'hélice qui peut éventuellement ne pas être constant sur la longueur totale de la vis.

Le traitement de surface de la face interne de chacune des enceintes, ou plus précisément le nettoyage peut également être réalisé en continu au cours du fonctionnement du dispositif, grâce à des moyens d'amenée d'un agent de traitement de surface de nature solide dans le courant de gaz rotatif.

Comme les poussières, l'agent de traitement de surface est projeté contre la paroi froide de l'enceinte sous l'effet de la force centrifuge, l'énergie cinétique des particules solides de l'agent de traitement est alors suffisante pour réaliser une abrasion du dépôt de poussières qui a adhéré à la paroi froide.

En fonction de la nature des matériaux constitutifs du dispositif et des dépôts, le matériau de traitement de surface peut être choisi de manière à réaliser une abrasion du dépôt aggloméré sur les parois de l'enceinte.

D'une manière avantageuse l'agent de traitement de surface est choisi parmi les constituants de la composition de matière vitrifiable qui est initialement utilisée dans le four, de manière à permettre son recyclage dans cette composition.

Le dispositif comprend donc des moyens d'apport et de collecte de l'agent de traitement de surface, respectivement en amont et en aval de la partie du dispositif où règne le courant de gaz rotatif pour la récupération des poussières ou solides condensés et/ou un recyclage de l'agent. La sortie des gaz peut se faire de toute façon connue, notamment tangentiellement à l'axe de l'enceinte en particulier pour une enceinte cylindrique, ou de façon axiale.

Le dispositif de traitement et son enveloppe de refroidissement sont constituées par une enveloppe externe délimitant un volume interne limité par des cloisons transversales, traversées par une pluralité de tubes formant les enceintes d'échange, chacune de ces enceintes recevant une vis à pas hélicoïdal.

D'une part, ceci constitue une double paroi résistant à des pressions intérieures très élevées. D'autre part, la juxtaposition des tubes à section circulaire offre une surface d'échange supérieure à celle offerte par une surface plane.

Il peut arriver qu'une partie des poussières soient trop fine pour rester collées à la paroi intérieure de l'enceinte de traitement. Le four peut alors comprendre en outre des moyens pour acheminer le gaz refroidi dans l'unité de refroidissement vers un filtre qui piège les poussières et rejette le gaz filtré dans l'atmosphère.

Grâce au dispositif selon l'invention, qui permet la récupération des poussières et substances condensables entraînées avec les gaz de combustion, le rendement d'un procédé, notamment de fusion, peut être amélioré en réintroduisant les poussières et substances récupérées par l'échangeur, dans la charge de matière à traiter dans le four ou directement dans le four.

Les poussières et substances condensables sont récupérées par abrasion en utilisant un agent de traitement de surface. L'utilisation d'un constituant de la composition rentrant dans la charge vitrifiable, notamment du sable en tant qu'agent de traitement de surface est particulièrement avantageuse dans le cas d'un four à verre car il peut être recyclé avec les poussières comme matière première de la charge vitrifiable.

Le dispositif d'échange de chaleur peut être dimensionné de manière à extraire une quantité de chaleur suffisante pour produire de la vapeur d'eau. Pour ce faire, on peut utiliser directement de l'eau comme fluide de refroidissement dans l'enveloppe du dispositif selon l'invention. On choisit alors une forme et une constitution des enceintes et de l'enveloppe apte à résister aux efforts imposés par la pression de vapeur dans l'enveloppe.

D'autres caractéristiques et avantages de l'invention apparaîtront à la lecture de la description des dessins annexés sur lesquels:
- la figure 1 représente schématiquement un four à verre selon l'invention,
- la figure 2 représente une vue en perspective du dispositif,

On précise tout d'abord que, par souci de clarté, les éléments représentés sur les figures ne sont pas nécessairement reproduits à l'échelle, certaines dimensions ayant pu être augmentées ou diminuées, et que certains détails de construction non essentiels pour la compréhension de l'invention ont pu être omis.

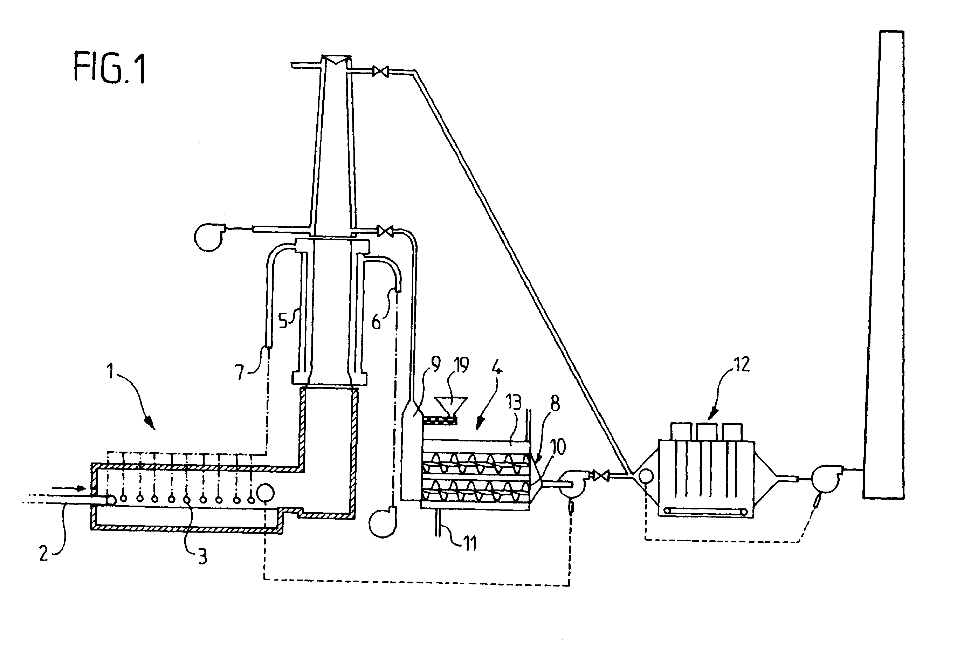

L'installation visible sur la figure 1 comprend essentiellement un four à verre 1, alimenté en mélange vitrifiable par des moyens usuels appropriés 2, et dans lequel l'énergie de fusion est apportée par des brûleurs à gaz 3.

Le verre produit dans le four est soutiré par des moyens non représentés en vue d'être transformé en des produits qui peuvent être très divers, notamment en des produits à base de laine ou de fibres de verre, tels que matelas, voiles, et autres, où le verre peut être additionné de diverses matières organiques ou minérales. A une extrémité du four, les gaz de combustion, qui sont chargés notamment de composés gazeux issus d'éléments volatils de la composition de verre, sont dirigés vers une unité de refroidissement 4 dans laquelle ils vont passer d'une température d'environ 1000°C à une température d'environ 200°C.

Cette unité comporte un premier échangeur de chaleur 5 utilisant l'air atmosphérique 6 comme fluide froid.

Cet échangeur est dimensionné de telle sorte que la chaleur extraite par l'air 6 porte la température de ce dernier à une valeur de l'ordre de 600°C, ce qui permet avantageusement de l'utiliser comme comburant chaud réintroduit 7 dans les brûleurs 3.

La température des gaz de combustion en sortie du premier échangeur est de l'ordre de 700°C. A cette température, les substances condensables issues d'éléments volatils de la composition de verre sont encore à l'état gazeux, et l'échangeur 5 n'a été exposé à aucune matière solide.

L'unité 4 comporte un deuxième échangeur 8 en série avec le premier échangeur 5, destiné à extraire une fraction supplémentaire de chaleur des gaz refroidis à 700°C en abaissant la température des gaz au-dessous du point de solidification des matières volatiles condensables.

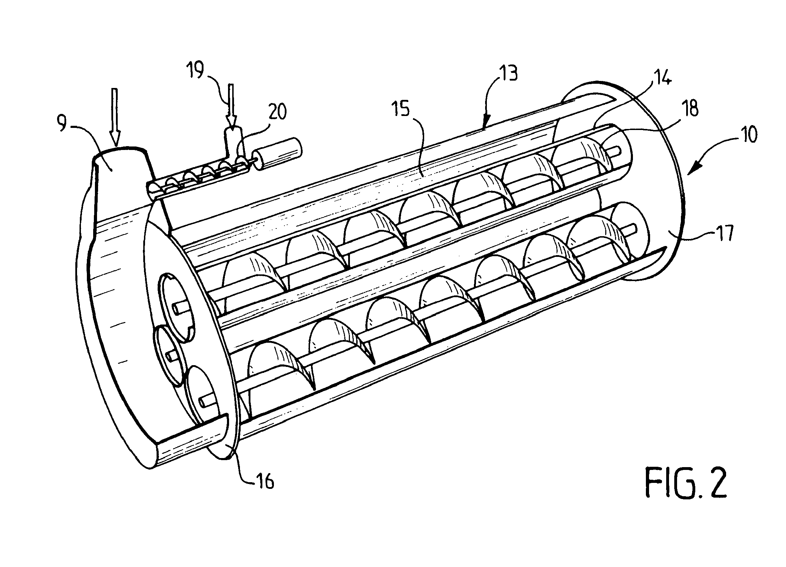

L'échangeur de chaleur 8 (visible en détail en figure 2) est constitué d'un dispositif qui a essentiellement la forme d'un corps cylindrique allongé dans lequel est disposé les moyens échangeurs de chaleur. Il comporte une alimentation en gaz 9 tangentielle par rapport à l'axe du corps tubulaire, et une sortie de gaz 10 axiale disposée du côté opposé à l'alimentation.

Il est dimensionné de manière à ce que les gaz traités sortant du dispositif soient refroidis à une température de l'ordre de 200°C.

Les gaz sont en outre au moins partiellement dépoussiérés, les poussières étant recueillies dans un collecteur 11. Les gaz sortant du dispositif en peuvent être ensuite traités avant rejet à l'atmosphère, au moyen d'un filtre 12 qui peut être de tout type connu, avantageusement un simple filtre à voile filtrant, ou un électrofiltre tel que ceux généralement employés pour traiter le gaz chaud en sortie d'une tour de refroidissement à pulvérisation d'eau.

La structure interne du dispositif est visible sur la vue en perspective de la figure 2.

La partie cylindrique de l'enceinte 13 du dispositif est constituée d'une enveloppe formée d'un tube extérieur et d'une pluralité de tubes intérieurs 14 qui délimite l'enceinte de traitement, tubes 14 entre lesquels circule un courant de fluide de refroidissement 15 tel que de l'eau introduit par une conduite et rejeté.

Les tubes sont maintenus en position à l'intérieur de l'enveloppe à l'aide d'une pluralité de flasques 16, 17 (deux sont visibles sur la figure 2), ces flasques 16, 17 étant sensiblement positionnés radialement par rapport à l'axe principal de l'enceinte.

Chacun des tubes 14 incorpore un dispositif permettant d'augmenter la turbulence de l'écoulement gazeux au sein du tube pour assurer un meilleur coefficient d'échange thermique au niveau de la surface d'échange d'avec le fluide de refroidissement.

Il s'agit de vis 18 à pas hélicoïdal, éventuellement à pas d'hélice non constant sur la totalité de sa longueur.

Par ailleurs, compte tenu de l'importance des gradients de température présents entre l'amont et l'aval de la vis 18, la vis 18 est réalisée dans sa partie amont en inox (gradient important), et dans sa partie aval, en acier, le sens amont/aval étant défini par le sens de l'écoulement des gaz provenant du premier échangeur 5.

Les gaz à traiter sont acheminés par une conduite qui communique avec l'entrée tangentielle 9 disposée sur l'un des côtés de la partie cylindrique, au voisinage du flasque 16. Les gaz introduits tangentiellement à la périphérie de chaque tube amorcent un mouvement rotatif à l'intérieur chaque tube.

En variante non représentée sur les figures, on prévoit que chaque tube et sa vis sont alimentés par leur propre conduite d'amenée du gaz à traiter, chaque tube disposant par ailleurs de son propre dispositif permettant d'injecter un agent de traitement de surface, permettant d'éliminer les poussières condensées sur les parois froides de chacun des tubes.

Ce mouvement rotatif est imposé par la localisation de l'entrée tangentielle en périphérie de chaque tube et par la présence des hélices ou vis 18 à l'intérieur des tubes 14, cette configuration assure l'instauration d'un courant de gaz rotationnel dans sensiblement toute la partie cylindrique.

Cette géométrie permet s'assurer une répartition ou un mélange optimal de l'agent de traitement au sein de chaque tube.

Le dispositif peut fonctionner en pression ou en aspiration, en installant un ventilateur respectivement en amont du dispositif, par exemple sur la conduite, pour pousser les gaz à travers le dispositif, ou en aval de la sortie pour aspirer les gaz traités vers l'extérieur. La vitesse des gaz dans le dispositif est avantageusement élevée, en particulier de l'ordre de 10 à 40 m/s à l'entrée du gaz chaud, correspondant à environ 10 à 30 m/s à la sortie du gaz refroidi.

En fonctionnement, les gaz chargés de substances condensables, tel que du bore (qui se condense à partir d'une température inférieure à 600°C, préférentiellement comprise entre 600 et 200°C, suivent le parcours imposé les gaz à l'intérieur des tubes 14 et longent la paroi refroidie par l'eau de refroidissement. Ce faisant, la température du gaz diminue, les substances condensables se solidifient en poussières qui adhèrent à la paroi froide quand elles viennent au contact de cette dernière, notamment sous l'effet de la force centrifuge, et viennent constituer un dépôt sur au moins une partie de la longueur des tubes.

Ce dépôt peut être gênant dans la mesure où, en s'épaississant il isole thermiquement la paroi et fait baisser le rendement de l'échange de chaleur, et où à terme, il serait susceptible de gêner le passage des gaz.

La forme du dispositif permet néanmoins un nettoyage très simple de la paroi, grâce aux moyens suivants.

Le dispositif comprend une réserve 19 (visible en figure 1) d'un agent de traitement de surface, notamment un matériau particulaire abrasif tel que du sable, capable de délivrer le matériau dans le courant de gaz à traiter, par un piquage dans la conduite ou bien directement dans l'enceinte. La distribution du matériau abrasif peut être commandée par une vanne ou par tout organe de distribution similaire 20.

Lorsque l'on souhaite éliminer le dépôt formé sur la paroi, il suffit de délivrer avec les gaz à traiter un débit de matériau abrasif qui peut être très faible.

Les particules du matériau sont entraînées dans le courant de gaz rotatif et projetées par force centrifuge contre les parois de telle sorte qu'elles arrachent le dépôt et décapent la surface de la paroi interne des tubes.

Le matériau abrasif et le dépôt arraché de la surface sont entraînés par le courant gazeux vers l'aval du dispositif et sont récoltées par tout dispositif approprié.

Lorsque le matériau abrasif utilisé est du sable, l'installation peut comprendre des moyens pour acheminer les solides séparés depuis le collecteur jusqu'aux moyens d'alimentation du four en mélange vitrifiable, puisque aussi bien le sable que la matière du dépôt entrent dans la composition de ce mélange.

Un temps de traitement très court suffit pour débarrasser la surface du dépôt et atteindre à nouveau un rendement d'échange thermique optimal, sans interrompre la circulation des gaz et donc sans perturber le procédé an amont du dispositif. A titre indicatif, dans les conditions d'échange thermique indiquées précédemment (température des gaz chauds et froids, vitesse des gaz), l'échangeur de chaleur peut fonctionner de manière satisfaisante pendant 8 heures d'affilée, après quoi un cycle de nettoyage de 10 minutes utilisant 3 litres de sable permet de décaper complètement les surfaces.

Un filtre 12 peut être installé sur la conduite de sortie de gaz pour une séparation complète du sable et éventuellement de poussières, avant que les gaz n'atteignent le filtre.

## Revendications

1. Four (1) pour la fusion de verre ou matière minérale similaire, comprenant une zone de sortie de gaz de combustion contenant des poussières et/ou des substances condensables et équipé d'une unité (4) de refroidissement dudit gaz, l'unité de refroidissement (4) comprenant au moins un dispositif pour l'extraction de chaleur à partir dudit gaz, de combustion, contenant des poussières et/ou des substances condensables pour la récupération des condensats, le dispositif comprenant au moins un échangeur de chaleur (4) comportant une enceinte (13) ayant une symétrie de révolution entourée d'une enveloppe de refroidissement, l'échangeur de chaleur comportant un orifice (9) permettant le passage d'un mélange optimal de l'agent de traitement de surface de la surface interne de ladite enceinte, ladite enceinte (13) étant pourvue par ailleurs d'au moins une vis à pas hélicoïdal disposée dans un tube (14) de manière coaxiale, le dispositif comprenant des moyens d'apport et de collecte de l'agent de traitement de surface, respectivement en amont et en aval de la partie du dispositif où règne le courant de gaz rotatif **caractérisé en ce que** l'enceinte (13) du dispositif a une partie cylindrique constituée de l'enveloppe de refroidissement, formée par un tube extérieur, et d'une pluralité de tubes intérieurs (14) qui délimitent l'enceinte de traitement, tubes (14) entre lesquels circule un courant de fluide de refroidissement (15) tel que de l'eau introduit par une conduite et rejeté, chaque tube intérieur (14) étant pourvu d'une vis à pas hélicoïdal.

2. Four selon la revendication 1, **caractérisé en ce qu'**il comprend des moyens pour acheminer le gaz refroidi dans l'unité de refroidissement vers un filtre (12) qui rejette le gaz filtré dans l'atmosphère.

3. Four selon la revendication 1 ou 2, **caractérisé en ce qu'**il comprend des moyens pour réintroduire les solides collectés dans la matière à traiter dans le four ou directement dans le four.

4. Four selon l'une quelconque des revendications précédentes, **caractérisé en ce que** le dispositif a une forme sensiblement cylindrique, conique, tronconique ou résultant de l'association d'au moins un cylindre et d'au moins un cône ou tronc de cône.

5. Four selon l'une quelconque des revendications précédentes, **caractérisé en ce que** le traitement de surface de la face interne de chacune des tubes (14) est réalisé en continu au cours du fonctionnement du dispositif, grâce à des moyens d'amenée d'un agent de traitement de surface de nature solide dans le courant de gaz rotatif.

6. Four selon l'une quelconque des revendications précédentes, **caractérisé en ce que** le matériau de traitement de surface est choisi de manière à réaliser une abrasion du dépôt aggloméré sur les parois du tube (14).

7. Four selon l'une quelconque des revendications précédentes, **caractérisé en ce que** l'agent de traitement de surface est choisi parmi les constituants de la composition de matière vitrifiable qui est initialement utilisée dans le four, de manière à permettre son recyclage dans cette composition.

8. Four selon l'une quelconque des revendications précédentes, **caractérisé en ce que** le dispositif comporte une alimentation en gaz tangentielle par rapport à l'axe de ladite enceinte (13) permettant le passage d'un mélange optimal d'un agent de traitement de surface de la surface interne de ladite enceinte, et une sortie de gaz (10) axiale disposée du côté opposé à l'alimentation.

9. Four selon l'une quelconque des revendications précédentes, **caractérisé en ce que** le pas de la vis hélicoïdale (18) est variable.

10. Four selon l'une quelconque des revendications précédentes, **caractérisé en ce que** la vis hélicoïdale (18) est réalisée en deux parties, respectivement en matière différente, notamment en inox et en acier.

11. Four selon l'une quelconque des revendications précédentes, **caractérisé en ce que** le dispositif est disposé horizontalement.

12. Procédé d'utilisation d'un four selon l'une quelconque des revendications précédentes, dans lequel les gaz entrant dans l'unité de refroidissement (4) sont des gaz de combustion qui sont chargés de composés gazeux issus d'éléments volatils de la composition du verre, la température des gaz de combustion est de l'ordre de 700°C à leur entrée dans l'échangeur (8), température à laquelle les substances condensables issues d'éléments volatils de la composition du verre sont encore à l'état gazeux, l'échangeur (8) étant dimensionné de manière à ce que les gaz traités sortant du dispositif soient refroidis à une température de l'ordre de 200°C.

13. Procédé selon la revendication 12, dans lequel les gaz sont refroidis d'une température d'environ 1000°C à une température d'environ 700°C dans un premier échangeur (5) relié en série avec ledit échangeur.

## Claims

1. Furnace (1) for melting glass or similar mineral material, comprising an exit zone for combustion gas containing dust and/or condensable substances and equipped with a unit (4) for cooling said gas, the cooling unit (4) comprising at least one device for extracting heat from said combustion gas, containing dust and/or condensable substances, for recovering the condensates, the device comprising at least one heat exchanger (4) comprising a shell (13) having a symmetry of revolution surrounded by a cooling jacket, the heat exchanger comprising an opening (9) for the passage of an optimal mixture of surfactant for treating the internal surface of said shell, said shell (13) being further provided with at least one helicoid screw arranged coaxially in a tube (14), the device comprising means for conveying and collecting the surfactant, respectively upstream and downstream of the part of the device containing the rotating gas stream, **characterized in that** the shell (13) of the device has a cylindrical part constituted of the cooling jacket, formed of an outer tube and a plurality of internal tubes (14) which bound the treatment chamber, tubes (14) between which a stream of cooling fluid (15) flows, such as water introduced via a line and discharged, each internal tube (14) being provided with a helicoid screw.

2. Furnace according to Claim 1, **characterized in that** it comprises means for transferring the gas cooled in the cooling unit to a filter (12) which discharges the filtered gas to the atmosphere.

3. Furnace according to either of Claims 1 and 2, **characterized in that** it comprises means for reintroducing the solids collected into the batch material to be treated in the furnace or directly into the furnace.

4. Furnace according to any of the preceding claims, **characterized in that** the device has a shape that is substantially cylindrical, conical, frustoconical or resulting from the combination of at least one cylinder and at least one cone or truncated cone.

5. Furnace according to any one of the preceding claims, **characterized in that** the surface treatment of the internal surface of each of the tubes (14) is continuous during the operation of the device, thanks to means for conveying a solid surfactant into the rotating gas stream.

6. Furnace according to any one of the preceding claims, **characterized in that** the surfactant is selected in order to abrade the deposit adhering to the walls of the tube (14).

7. Furnace according to any one of the preceding claims, **characterized in that** the surfactant is selected from the components of the glass batch composition that is initially used in the furnace, in order to recycle it to this composition.

8. Furnace according to any one of the preceding claims, **characterized in that** the device comprises a gas inlet tangential to the axis of said shell (13) for the passage of an optimal mixture of surfactant for treating the internal surface of said shell, and an axial gas outlet (10) arranged on the side opposite the feed side.

9. Furnace according to any one of the preceding claims, **characterized in that** the pitch of the helicoid screw (18) is variable.

10. Furnace according to any one of the preceding claims, **characterized in that** the helicoid screw (18) is made in two parts, respectively from different materials, particularly from stainless steel and carbon steel.

11. Furnace according to any one of the preceding claims, **characterized in that** the device is arranged horizontally.

12. Process for using a furnace according to any one of the preceding claims, in which the gases entering into the cooling unit (4) are combustion gases, which are laden with gaseous compounds derived from volatile elements of the glass batch, the temperature of the combustion gases is about 700°C at their inlet into the exchanger (8), at which temperature the condensable substances derived from volatile elements of the glass batch are still in the gas state, the exchanger (8) being dimensioned so that the treated gases exiting the device are cooled to a temperature of about 200°C.

13. Process according to Claim 12, in which the gases are cooled from a temperature of about 1000°C to a temperature of about 700°C in a first exchanger (5) connected in series with said exchanger.

## Patentansprüche

1. Ofen (1) zum Schmelzen von Glas oder ähnlichem mineralischem Material, der einen Bereich für den Austritt von Verbrennungsgas, das Stäube und/oder kondensierbare Substanzen enthält, umfasst und der mit einer Einheit (4) zum Kühlen des Gases ausgestattet ist, wobei die Kühleinheit (4) wenigstens eine Vorrichtung zum Abziehen von Wärme aus dem Stäube und/oder kondensierbare Substanzen enthaltenden Verbrennungsgas für die Gewinnung der Kondensate umfasst, wobei die Vorrichtung wenigstens einen Wärmetauscher (4) umfasst, der einen rotationssymmetrischen Raum (13) aufweist, welcher von einem Kühlmantel umgeben ist, wobei der Wärmetauscher eine Öffnung (9) aufweist, die den Durchgang eines optimalen Gemischs des Mittels zur Oberflächenbehandlung der Innenseite des Raums ermöglicht, wobei der Raum (13) zudem mit wenigstens einer Schnecke mit spiralförmiger Steigung versehen ist, die in einem Rohr (14) koaxial angeordnet ist, wobei die Vorrichtung Mittel zum Zuführen und Sammeln des Oberflächenbehandlungsmittels vor bzw. nach dem Teil der Vorrichtung, in dem der rotierende Gasstrom herrscht, umfasst, **dadurch gekennzeichnet, dass** der Raum (13) der Vorrichtung einen zylindrischen Teil aufweist, der aus dem Kühlmantel, welcher von einem Außenrohr gebildet ist, und aus einer Vielzahl von Innenrohren (14), die den Behandlungsraum begrenzen, besteht, Rohren (14), zwischen denen ein Kühlflüssigkeitsstrom (15), wie Wasser, fließt, der über eine Rohrleitung eingeleitet und abgeführt wird, wobei jedes Innenrohr (14) mit einer Schnecke mit spiralförmiger Steigung versehen ist.

2. Ofen nach Anspruch 1, **dadurch gekennzeichnet, dass** er Mittel zum Befördern des in der Kühleinheit gekühlten Gases zu einem Filter (12), der das gefilterte Gas in die Atmosphäre ableitet, umfasst.

3. Ofen nach Anspruch 1 oder 2, **dadurch gekennzeichnet, dass** er Mittel umfasst, um die gesammelten Feststoffe wieder in das in dem Ofen zu behandelnde Material oder direkt in den Ofen einzuleiten.

4. Ofen nach einem der vorstehenden Ansprüche, **dadurch gekennzeichnet, dass** die Vorrichtung im Wesentlichen zylinder-, kegel-, kegelstumpfförmig ist oder eine Form aufweist, die sich aus der Verbindung von wenigstens einem Zylinder und wenigstens einem Kegel oder Kegelstumpf ergibt.

5. Ofen nach einem der vorstehenden Ansprüche, **dadurch gekennzeichnet, dass** die Oberflächenbehandlung der Innenseite eines jeden der Rohre (14) im Laufe des Betriebs der Vorrichtung mit Hilfe von Mitteln zum Zuführen eines Oberflächenbehandlungsmittels fester Art in dem rotierenden Gasstrom kontinuierlich erfolgt.

6. Ofen nach einem der vorstehenden Ansprüche, **dadurch gekennzeichnet, dass** das Oberflächenbehandlungsmaterial derart gewählt ist, dass ein Abrieb der an den Wänden des Rohrs (14) angesammelten Ablagerung erfolgt.

7. Ofen nach einem der vorstehenden Ansprüche, **dadurch gekennzeichnet, dass** das Oberflächenbehandlungsmittel aus den Bestandteilen der verglasbaren Materialzusammensetzung, die anfangs in dem Ofen verwendet wird, ausgewählt ist, um dessen Rückführen in diese Zusammensetzung zu ermöglichen.

8. Ofen nach einem der vorstehenden Ansprüche, **dadurch gekennzeichnet, dass** die Vorrichtung eine gegenüber der Achse des Raums (13) tangentiale Gaszuführung umfasst, die den Durchgang eines optimalen Gemischs eines Mittels zur Oberflächenbehandlung der Innenseite des Raums ermöglicht, sowie einen axialen Gasaustritt (10), der auf der der Zuführung gegenüberliegenden Seite angeordnet ist.

9. Ofen nach einem der vorstehenden Ansprüche, **dadurch gekennzeichnet, dass** die Steigung der Schnecke (18) veränderlich ist.

10. Ofen nach einem der vorstehenden Ansprüche, **dadurch gekennzeichnet, dass** die Schnecke (18) aus zwei Teilen, jeweils aus unterschiedlichem Material, insbesondere aus rostfreiem Stahl und aus Stahl, ausgebildet ist.

11. Ofen nach einem der vorstehenden Ansprüche, **dadurch gekennzeichnet, dass** die Vorrichtung horizontal angeordnet ist.

12. Verfahren zur Verwendung eines Ofens nach einem der vorstehenden Ansprüche, wobei die in die Kühleinheit (4) eintretenden Gase Verbrennungsgase sind, die mit gasförmigen Verbindungen belastet sind, welche aus flüchtigen Elementen der Zusammensetzung des Glases hervorgehen, wobei die Temperatur der Verbrennungsgase bei ihrem Eintreten in den Tauscher (8) in der Größenordnung von 700 °C liegt, Temperatur, bei der die aus flüchtigen Elementen der Zusammensetzung des Glases hervorgehenden kondensierbaren Substanzen sich noch in gasförmigem Zustand befinden, wobei der Tauscher (8) derart dimensioniert ist, dass die aus der Vorrichtung austretenden behandelten Gase auf eine Temperatur in der Größenordnung von 200 °C abgekühlt sind.

13. Verfahren nach Anspruch 12, wobei die Gase in einem mit dem Tauscher in Reihe geschalteten ersten Tauscher (5) von einer Temperatur von etwa 1000 °C auf eine Temperatur von circa 700 °C abgekühlt werden.
